# EUROPEAN PATENT APPLICATION

(11) **EP 4 613 996 A1**
(43) Date of publication of application: **10.09.2025**
(21) Application number: 25160261.1
(22) Date of filing: 26.02.2025
(51) Int. Cl.: F02D 19/02, F02M 21/02

(54) **FUEL SUPPLY DEVICE AND ENGINE SYSTEM**

(30) Priority: 08.03.2024 JP 2024035779
(71) Applicant: Yanmar Holdings Co., Ltd., Osaka-shi, Osaka (JP)
(72) Inventor: IWAKURA, Masanao, Osaka-shi (JP); FUKUI, Yoshinori, Osaka-shi (JP); KUBO, Takahiro, Osaka-shi (JP); MIZUTANI, Sumio, Kobe-shi (JP); OHARA, Ryota, Akashi-shi (JP); ITO, Kazuhisa, Akashi-shi (JP)
(74) Representative: Sekiguchi, Kazuya

(57) **Abstract**

[Problem] To provide a fuel supply device and engine system, being capable of precisely controlling the supply amount of gaseous fuel and precisely controlling the output of an engine.

[Solution] A fuel supply device 3 supplying at least gaseous fuel to a supply target such as an engine 2 includes a gaseous fuel supply unit 16 that is a gaseous fuel adjustment unit adjusting the supply amount of the gaseous fuel and supplying the gaseous fuel to the supply target; and a temperature adjustment unit 14 that adjusts the temperature of the gaseous fuel supplied to the gaseous fuel supply unit 16 according to the operation status and/or the operation environment of the supply target.

## Description

### TECHNICAL FIELD

The present invention relates to a fuel supply device supplying at least gaseous fuel to a supply target such as an engine, and to an engine system including the fuel supply device.

### BACKGROUND ART

Conventionally, an engine system including a gas engine or a dual fuel engine includes a gaseous fuel supply valve such as a gas admission valve (GAV) in order to input gaseous fuel such as hydrogen into a combustion chamber in a cylinder.

The engine system disclosed in Patent Document 1 includes an engine that generates power by combusting at least gaseous fuel, a gaseous fuel supply pipe that supplies gaseous fuel to the engine, and a fuel flow rate adjustment unit that adjusts the flow rate of the gaseous fuel to the gaseous fuel supply pipe.

### PRIOR ART DOCUMENT

### PATENT DOCUMENT

Patent Document 1: JP2022-149336 A

### SUMMARY OF INVENTION

### TECHNICAL PROBLEM

In an engine system, in order to precisely control the output of an engine, it is necessary to adjust the valve opening period of a gaseous fuel supply valve and the gaseous fuel injection amount by a fuel flow rate adjustment unit. However, since the gaseous fuel supply valve has a restriction regarding the minimum injection period in an engine system, it is difficult to accurately control the gaseous fuel injection amount in a low load region, and it is difficult to appropriately control a minute engine output that is less than the engine output in the minimum injection period.

An object of the present invention is to provide a fuel supply device and an engine system capable of precisely controlling the supply amount of gaseous fuel to precisely control the output of an engine.

### SOLUTION TO PROBLEM

In order to solve the above problem, a fuel supply device of the present invention supplies at least gaseous fuel to a predetermined supply target, the fuel supply device including: a gaseous fuel adjustment unit adjusting a supply amount of the gaseous fuel and supplying the gaseous fuel to the supply target; and a temperature adjustment unit adjusting a temperature of the gaseous fuel supplied to the gaseous fuel adjustment unit according to an operation status and/or an operation environment of the supply target.

Alternatively, a fuel supply device of the present invention supplies at least gaseous fuel to a predetermined supply target, the fuel supply device including: a gaseous fuel adjustment unit adjusting a supply amount of the gaseous fuel and supplying the gaseous fuel to the supply target; and a supply pressure adjustment unit adjusting a supply pressure of the gaseous fuel supplied to the gaseous fuel adjustment unit according to an operation status and/or an operation environment of the supply target.

An engine system of the present invention includes the fuel supply device described above and the engine, which is the supply target, in which the temperature adjustment unit has a heat exchange unit circulating a heat exchange medium to act on the gaseous fuel, and a flow rate adjustment unit adjusting a flow rate of the heat exchange medium; the engine system further includes a control device controlling the gaseous fuel adjustment unit and the flow rate adjustment unit; the control device calculates a target temperature of the gaseous fuel based on a target output of the engine; and when a detected temperature of the gaseous fuel is less than the target temperature, the flow rate adjustment unit is controlled such that the detected temperature becomes the target temperature to raise the temperature of the gaseous fuel.

Alternatively, an engine system of the present invention includes the fuel supply device described above and the engine, which is the supply target, in which the temperature adjustment unit has a heat exchange unit circulating a heat exchange medium to act on the gaseous fuel, and a flow rate adjustment unit adjusting a flow rate of the heat exchange medium; the engine system further includes a control device controlling the gaseous fuel adjustment unit and the flow rate adjustment unit; and the control device controls the flow rate adjustment unit to stop circulation of the heat exchange medium when a target output of the engine is equal to or greater than a predetermined output threshold.

Alternatively, an engine system of the present invention includes the fuel supply device described above and the engine, which is the supply target, in which the temperature adjustment unit has a heat exchange unit circulating a heat exchange medium to act on the gaseous fuel, and a cooling device cooling the heat exchange medium; the engine system further includes a control device controlling the gaseous fuel adjustment unit and the cooling device; and the control device controls the cooling device to operate when a target output of the engine is equal to or greater than a predetermined output threshold.

### ADVANTAGEOUS EFFECTS OF INVENTION

The present invention provides a fuel supply device and an engine system capable of precisely controlling the supply amount of gaseous fuel to precisely control the output of an engine.

### BRIEF DESCRIPTION OF DRAWINGS

FIG. 1 is a schematic diagram illustrating an example of an engine system including a fuel supply device according to an embodiment of the present invention.
FIG. 2 is a schematic diagram illustrating an example of an engine in the engine system including the fuel supply device according to the embodiment of the present invention.
FIG. 3 is a schematic diagram illustrating an example of a temperature adjustment unit in the fuel supply device according to the embodiment of the present invention.
FIG. 4 is a schematic diagram illustrating another example of the temperature adjustment unit in the fuel supply device according to the embodiment of the present invention.
FIG. 5 is a flowchart illustrating an operation example of the fuel supply device according to the embodiment of the present invention.
FIG. 6 is a time chart illustrating an operation example in a case where the mode of the fuel supply device according to the embodiment of the present invention is changed from a diesel mode to a gas mode.
FIG. 7 is a graph illustrating an example of a map indicating the relationship between engine loads and target supply pressures of gaseous fuel in a fuel supply device according to a modification of the present invention.
FIG. 8 is a graph illustrating an example of a map indicating the relationship between engine loads and target supply pressures of gaseous fuel depending on co-firing ratios in a fuel supply device according to a modification of the present invention.

### DESCRIPTION OF EMBODIMENTS

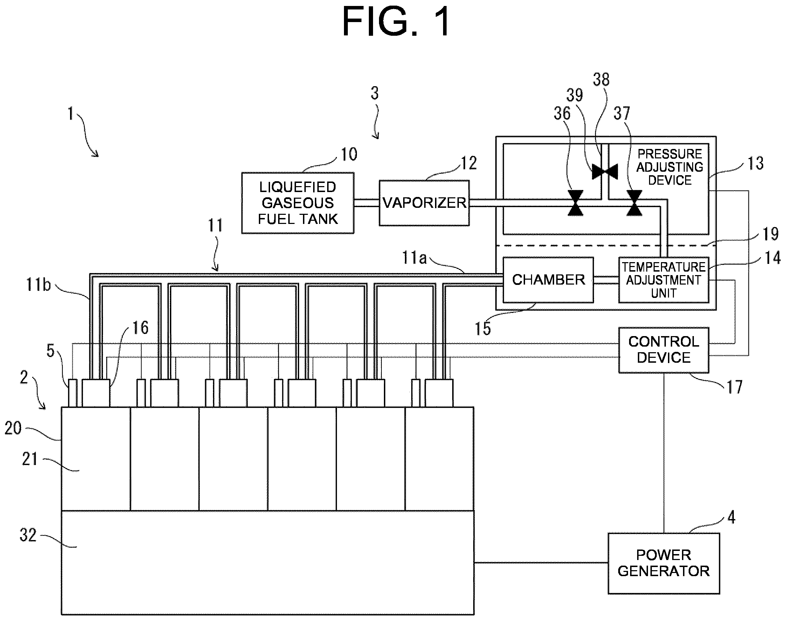

An engine system 1 as an embodiment of the present invention is described with reference to drawings. As illustrated in FIG. 1, the engine system 1 includes an engine 2 operating at least on gaseous fuel and a fuel supply device 3 supplying gaseous fuel to the engine 2 which is a supply target of fuel. Although examples of the engine 2 include a propulsion engine (main engine) for a ship or the like, and a power generation engine (auxiliary engine), in the present embodiment, an example in which the engine system 1 includes a power generation engine (auxiliary engine) as the engine 2, the engine 2 and a power generator 4 are connected, and the power generator 4 is driven by an output of the engine 2 is described.

In the present embodiment, in particular, an example in which the engine 2 is configured as a dual-fuel engine that is driven by inputting, into a combustion chamber 25 of the engine 2, at least one of gaseous fuel such as hydrogen and liquid fuel such as light oil or heavy oil is described. The engine system 1 operates in a combustion mode set among a gas mode in which only gaseous fuel is used, a diesel mode in which only liquid fuel is used, and a co-firing mode in which both gaseous fuel and liquid fuel are used, as fuel for the engine 2.

The engine system 1 includes a liquid fuel supply unit 5 that supplies liquid fuel to the engine 2. The liquid fuel supply unit 5 is connected to a liquid fuel tank (not shown) via a liquid fuel supply passage (not shown) and is configured to input (inject) liquid fuel supplied through the liquid fuel supply passage into the combustion chamber 25 of the engine 2.

The fuel supply device 3 includes a liquefied gaseous fuel tank 10 (gaseous fuel storage unit), a gaseous fuel supply passage 11, a vaporizer 12, a pressure adjusting device 13, a temperature adjustment unit 14, a chamber 15, a gaseous fuel supply unit 16 (gaseous fuel adjustment unit), and a control device 17. Details of each unit of the fuel supply device 3 will be described later.

First, the engine 2 is described.

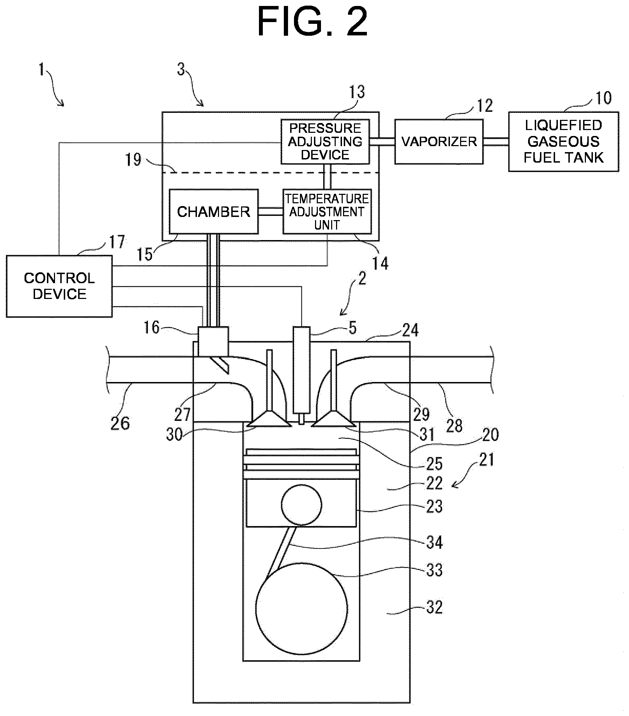

The engine 2 is configured to include a plurality of cylinder engines 21 in a cylinder block 20. As illustrated in FIG. 2, each cylinder engine 21 is composed of a cylinder 22, a piston 23, and a cylinder head 24, and forms the combustion chamber 25 inside, for example. The gaseous fuel supply unit 16 and the liquid fuel supply unit 5 are provided for each cylinder engine 21.

The cylinder 22 is cylindrically formed in the cylinder block 20, and the piston 23 is slidably housed in the cylinder 22, for example. The cylinder head 24 is attached to the upper side of the cylinder 22, and forms the combustion chamber 25 inside the cylinder 22 and the cylinder head 24.

The cylinder head 24 has an intake port 27 connected to an intake passage 26 through which air is introduced, and an exhaust port 29 connected to an exhaust passage 28 through which exhaust gas is discharged. The intake port 27 and the exhaust port 29 communicate with the combustion chamber 25, and the cylinder head 24 includes an intake valve 30 and an exhaust valve 31 that open and close the intake port 27 and the exhaust port 29, respectively, with respect to the combustion chamber 25.

Although FIG. 2 illustrates an example in which the intake passage 26 and the intake port 27 are directly connected, the intake passage 26 and the intake port 27 may be connected via an intake manifold provided between the intake passage 26 and the engine 2 in another example. Although FIG. 2 illustrates an example in which the exhaust passage 28 and the exhaust port 29 are directly connected, the exhaust passage 28 and the exhaust port 29 may be connected via an exhaust manifold provided between the exhaust passage 28 and the engine 2 in another example.

The cylinder head 24 is provided with the gaseous fuel supply unit 16 so that gaseous fuel is supplied to the inside of the intake port 27 and with the liquid fuel supply unit 5 so that liquid fuel is supplied to the combustion chamber 25. The intake port 27 introduces, into the combustion chamber 25, a mixture gas of gaseous fuel supplied from the gaseous fuel supply unit 16 and air supplied from the intake passage 26. The exhaust port 29 discharges exhaust gas generated in the combustion chamber 25 to the exhaust passage 28.

In each cylinder engine 21, a small amount of pilot fuel (liquid fuel) is injected into the combustion chamber 25 by the liquid fuel supply unit 5 at an appropriate timing at which the mixture gas introduced from the intake port 27 is compressed as the piston 23 slides, and the gaseous fuel in the gas mixture is thereby ignited. The piston 23 is reciprocated within the cylinder engine 21 by propulsion force obtained from explosion caused in the combustion chamber 25.

Each cylinder 22 in the plurality of cylinder engines 21 communicates with a crankcase 32, and a crankshaft 33 is rotatably supported by the crankcase 32. The piston 23 of each cylinder engine 21 is connected to the crankshaft 33 via a connecting rod 34, and the reciprocating motion of the piston 23 is converted into a rotational motion of the crankshaft 33 via the connecting rod 34.

Next, each unit of the fuel supply device 3 is described.

The liquefied gaseous fuel tank 10 stores liquefied gaseous fuel and stores, for example, liquid hydrogen fuel, which is hydrogen fuel in a liquid state.

The gaseous fuel supply passage 11 connects the liquefied gaseous fuel tank 10 to the gaseous fuel supply unit 16, causing gaseous fuel to flow from the liquefied gaseous fuel tank 10 to the gaseous fuel supply unit 16. The gaseous fuel supply passage 11 is provided with the vaporizer 12, the pressure adjusting device 13 (supply pressure adjustment unit), the temperature adjustment unit 14, and the chamber 15 in the stated order between the liquefied gaseous fuel tank 10 and the gaseous fuel supply unit 16.

The gaseous fuel supply passage 11 is composed of a multi-layer tube (for example, a double tube) between the chamber 15 and the gaseous fuel supply unit 16 and is configured to maintain the gaseous fuel pressure (supply pressure) adjusted by the pressure adjusting device 13 and the gaseous fuel temperature adjusted by the temperature adjustment unit 14. In the gaseous fuel supply passage 11 composed of a multi-layer tube, gaseous fuel flows through the innermost pipe, while air flows through a space between the innermost pipe and the outer pipe covering the innermost pipe.

The gaseous fuel supply passage 11 also has a common passage 11a, which allows gaseous fuel to flow to a plurality of gaseous fuel supply units 16 of the plurality of cylinder engines 21 in common, and a plurality of branch passages 11b, which branch off from the common passage 11a and allow gaseous fuel to flow to each of the plurality of gaseous fuel supply units 16. The common passage 11a is provided with the vaporizer 12, the pressure adjusting device 13, the temperature adjustment unit 14, and the chamber 15 in the stated order.

The vaporizer 12 vaporizes liquid gaseous fuel supplied from the liquefied gaseous fuel tank 10, and supplies the vaporized gaseous fuel to the pressure adjusting device 13 via the gaseous fuel supply passage 11.

The pressure adjusting device 13 adjusts the supply pressure of gaseous fuel supplied via the gaseous fuel supply unit 16 and supplies gaseous fuel with the adjusted supply pressure to the temperature adjustment unit 14 via the gaseous fuel supply passage 11. The pressure adjusting device 13 is composed of a gas valve unit (GVU) having a plurality of valves, for example.

For example, the pressure adjusting device 13 is configured to include a first shut-off valve 36 on the upstream side and a second shut-off valve 37 on the downstream side in the gaseous fuel supply direction in the gaseous fuel supply passage 11, and to include an open valve 39 in an open passage 38 branching off from the gaseous fuel supply passage 11 between the first shut-off valve 36 and the second shut-off valve 37, as illustrated in FIG. 1. The pressure adjusting device 13 controls the supply pressure (flow rate per unit time) of the gaseous fuel flowing on the downstream side of the pressure adjusting device 13 by controlling opening degrees of the first shut-off valve 36 and the second shut-off valve 37 in response to a control signal from the control device 17. The pressure adjusting device 13 can usually control a function to purge gaseous fuel in the gaseous fuel supply passage 11 by closing the open valve 39 while closing the first shut-off valve 36 and opening the open valve 39 in response to a control signal from the control device 17.

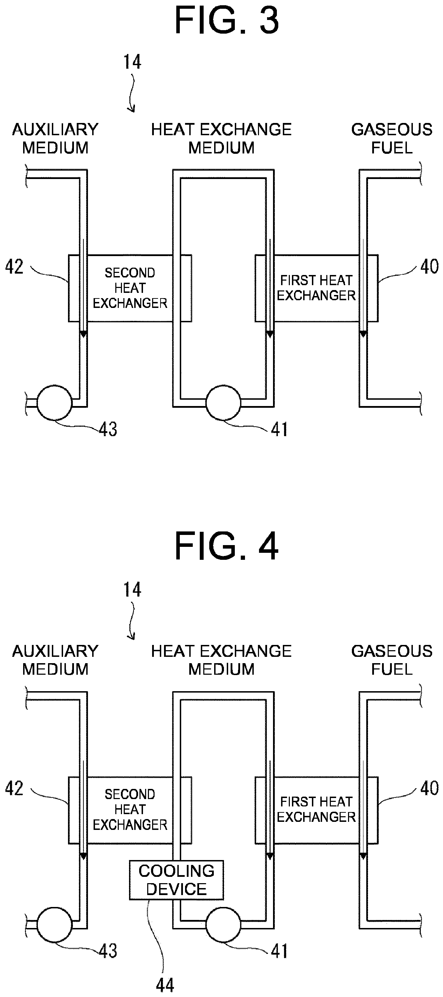

The temperature adjustment unit 14 adjusts the temperature of gaseous fuel supplied via the gaseous fuel supply unit 16, and the gaseous fuel with the adjusted temperature is supplied to the chamber 15 via the gaseous fuel supply passage 11. The temperature adjustment unit 14 is provided separately from the vaporizer 12, which is provided to make the liquefied gaseous fuel stored in the liquefied gaseous fuel tank 10 into a gaseous state, and adjusts the temperature of the gaseous fuel in a gaseous state. The temperature adjustment unit 14 has, for example, a first heat exchanger 40 (heat exchange unit) and a first flow rate adjustment unit 41 (flow rate adjustment unit), and further has a second heat exchanger 42 and a second flow rate adjustment unit 43, as illustrated in FIG. 3.

The first heat exchanger 40 circulates a heat exchange medium such as an ethylene glycol aqueous solution while circulating gaseous fuel, and adjusts the temperature of the gaseous fuel by allowing the heat exchange medium to act on the gaseous fuel for heat exchange. The first flow rate adjustment unit 41 is composed of a pump or the like, and adjusts the flow rate of the heat exchange medium circulating through the first heat exchanger 40 in response to a control signal from the control device 17, thereby adjusting the temperature of the gaseous fuel that undergoes heat exchange with the heat exchange medium.

The second heat exchanger 42 circulates an auxiliary medium such as engine cooling water or engine oil while circulating gaseous fuel, and adjusts the temperature of the heat exchange medium by allowing the auxiliary medium to act on the heat exchange medium for heat exchange. The second flow rate adjustment unit 43 is composed of a pump or the like, and adjusts the flow rate of the auxiliary medium circulating through the second heat exchanger 42 in response to a control signal from the control device 17, thereby adjusting the temperature of the heat exchange medium that undergoes heat exchange with the auxiliary medium.

That is, the temperature of gaseous fuel is precisely adjusted by utilizing the first heat exchanger 40 and the second heat exchanger 42. Note that the first flow rate adjustment unit 41 and the second flow rate adjustment unit 43 can stop heat exchange by stopping circulation of the heat exchange medium or the auxiliary medium.

The temperature adjustment unit 14 may include a cooling device 44 in addition to the first heat exchanger 40 and first flow rate adjustment unit 41 and the second heat exchanger 42 and second flow rate adjustment unit 43 described above, as illustrated in FIG. 4. The temperature of the heat exchange medium for adjusting the temperature of gaseous fuel in the first heat exchanger 40 is adjusted by the auxiliary medium in the second heat exchanger 42. Therefore, the cooling device 44 is provided in a flow passage of the heat exchange medium, is operated by electrical power, and thus decreases the temperature of the heat exchange medium.

The chamber 15 is provided between the temperature adjustment unit 14 and the gaseous fuel supply unit 16 in the gaseous fuel supply direction in the gaseous fuel supply passage 11. The chamber 15 stores a predetermined amount or more of gaseous fuel with a temperature adjusted by the temperature adjustment unit 14, with the supply pressure adjusted by the pressure adjusting device 13. In addition, the adjusted supply pressure and temperature of gaseous fuel are maintained on the downstream side of the chamber 15 by applying pressure inside the gaseous fuel supply passage 11 toward the downstream side of the chamber 15 regardless of supply of gaseous fuel from the gaseous fuel supply unit 16.

The gaseous fuel supply unit 16 is provided to the cylinder head 24 of each of the cylinder engines 21 of the engine 2 and supplies gaseous fuel to the inside of the intake port 27 according to a control signal from the control device 17, as described above. The gaseous fuel supply unit 16 is composed of a gas admission valve (GAV) or the like for injecting gaseous fuel, for example. The gaseous fuel supply unit 16 can adjust the supply amount of gaseous fuel by adjusting a valve opening period according to a control signal from the control device 17.

The control device 17 is a computer such as an engine control unit (ECU) that controls operation of the engine 2, includes a CPU, a ROM, a RAM, and the like, and is configured to control each unit of the engine 2. The control device 17 stores various programs to control the engine 2 and controls the engine 2 by reading a program and executing same. In particular, the control device 17 controls the pressure adjusting device 13 and the temperature adjustment unit 14 according to an operation status such as the engine output (engine revs) of the engine 2 or an operation environment such as the environmental temperature of the engine 2 or the fuel supply device 3. Incidentally, the control device 17 may be provided on the engine 2 side or may be provided on the fuel supply device 3 side.

In the engine system 1, a target output of the engine 2 is determined according to the operating state (generator load) of the generator 4, and the supply amount of gaseous fuel necessary for the combustion chamber 25 of each of the cylinder engines 21 is determined according to the target output, so that the valve opening period and the supply pressure of gaseous fuel supplied to the combustion chamber 25 by the gaseous fuel supply unit 16 are determined according to the target output. Then, the control device 17 controls the pressure adjusting device 13 according to the target output to adjust the supply pressure of gaseous fuel so that the supply pressure (or a supply pressure range) corresponding to the target output, that is, the target supply pressure (or a target supply pressure range) is obtained. The control device 17 may set the valve opening period of the gaseous fuel supply unit 16 according to a previously set target supply pressure (or a target supply pressure range), or may set the target supply pressure (or a target supply pressure range) according to a previously set valve opening period of the gaseous fuel supply unit 16.

On the other hand, in the engine system 1, since a lower limit value (minimum valve opening period) and an upper limit value (maximum valve opening period) of the valve opening period for gaseous fuel in the gaseous fuel supply unit 16 and a lower limit value (minimum supply pressure) and an upper limit value (maximum supply pressure) of the supply pressure for gaseous fuel in the pressure adjusting device 13 are determined, the control device 17 cannot set a valve opening period and a supply pressure outside the ranges between the lower limit values and the upper limit values. Therefore, even when the valve opening period of the gaseous fuel supply unit 16 calculated according to the target output is less than the minimum valve opening period because the target output (generator load) of the engine 2 is low (in a low load region), the control device 17 sets the valve opening period of the gaseous fuel supply unit 16 to be equal to or longer than the minimum valve opening period, and thus the actual output of the engine 2 may exceed the target output.

However, according to the present embodiment, the control device 17 can adjust the supply amount by adjusting the energy density (supply pressure) of gaseous fuel supplied to the gaseous fuel supply unit 16 regardless of the supply pressure set for the pressure adjusting device 13 by adjusting the temperature of gaseous fuel supplied to the gaseous fuel supply unit 16 based on the gas state equation. Incidentally, the temperature of gaseous fuel supplied to the gaseous fuel supply unit 16 is not limited to a specific target temperature, and gaseous fuel with a target energy density, that is, gaseous fuel with a target supply pressure (or in a target supply pressure range) can be obtained as long as the temperature is within a predetermined target temperature range.

Specifically, in order to obtain the target temperature of gaseous fuel corresponding to the target output of the engine 2, the control device 17 may preliminarily determine a map or a mathematical expression indicating the relationship between the target output of the engine 2 and the target temperature (or the target temperature range) of gaseous fuel and store same. The control device 17 calculates the target temperature of gaseous fuel based on the target output according to the map or the mathematical expression. Further, a parameter for specifying the target temperature may be only the target output of the engine 2, but in addition to the target output or instead of the target output, a map or a mathematical expression may be preliminarily determined so as to specify the target temperature according to a discharge pressure of the vaporizer 12 or a reference injection period of the gaseous fuel supply unit 16. Note that the control device 17 may hold a map or a mathematical expression indicating the relationship between the target output of the engine 2 and the target temperature of gaseous fuel for each operation environment (for example, environmental temperature or humidity), and use a map or a mathematical expression corresponding to the detected operation environment.

In addition, the control device 17 detects the actual temperature (detected temperature) of gaseous fuel supplied to the gaseous fuel supply unit 16, compares the target temperature (or the target temperature range) with the detected temperature, and controls the temperature of gaseous fuel with the temperature adjustment unit 14 so that the detected temperature becomes the target temperature when the detected temperature is not the target temperature (or when the detected temperature is outside the target temperature range). In the engine system 1, in order to detect the temperature of gaseous fuel supplied to the gaseous fuel supply unit 16, a temperature sensor (not shown) is provided to any of the temperature adjustment unit 14, the chamber 15, the gaseous fuel supply passage 11, and the gaseous fuel supply unit 16.

Further, when gaseous fuel reaches the target temperature, the control device 17 controls the pressure adjusting device 13 to adjust the supply pressure of gaseous fuel in consideration of a supply pressure fluctuation because the supply pressure of gaseous fuel in the gaseous fuel supply unit 16 fluctuates according to the target temperature with respect to the supply pressure of gaseous fuel in the pressure adjusting device 13.

For example, when the target output of the engine 2 is low (in a low load region) and the detected temperature is less than the target temperature, the control device 17 controls the first flow rate adjustment unit 41 of the temperature adjustment unit 14 to raise the temperature of gaseous fuel so that the detected temperature becomes the target temperature. When the target output of the engine 2 is equal to or greater than a predetermined output threshold (in a high load region), the control device 17 controls the temperature adjustment unit 14 so as not to raise the temperature of gaseous fuel regardless of the target temperature corresponding to the target output, and, for example, controls the first flow rate adjustment unit 41 so as to stop circulation of the heat exchange medium in the temperature adjustment unit 14.

Accordingly, by controlling not only the supply pressure of gaseous fuel in the pressure adjusting device 13 but also the temperature of gaseous fuel with the temperature adjustment unit 14, the control device 17 can more precisely adjust the energy density (supply pressure) of gaseous fuel supplied to the gaseous fuel supply unit 16, and can more precisely adjust the supply amount. For example, even when the valve opening period of the gaseous fuel supply unit 16 calculated according to the target output of the engine 2 becomes less than the minimum valve opening period, the control device 17 decreases the energy density (supply pressure) of gaseous fuel by raising the temperature of gaseous fuel by the temperature adjustment unit 14, so that the actual output of the engine 2 can reach the target output even when the valve opening period of the gaseous fuel supply unit 16 is set to be equal to or more than the minimum valve opening period. In other words, when the valve opening period (target valve opening period) of the gaseous fuel supply unit 16 calculated according to the target output of the engine 2 is less than the minimum valve opening period, the control device 17 raises the temperature of gaseous fuel with the temperature adjustment unit 14 so that the valve opening period of the gaseous fuel supply unit 16 to be actually controlled becomes equal to or more than the minimum valve opening period.

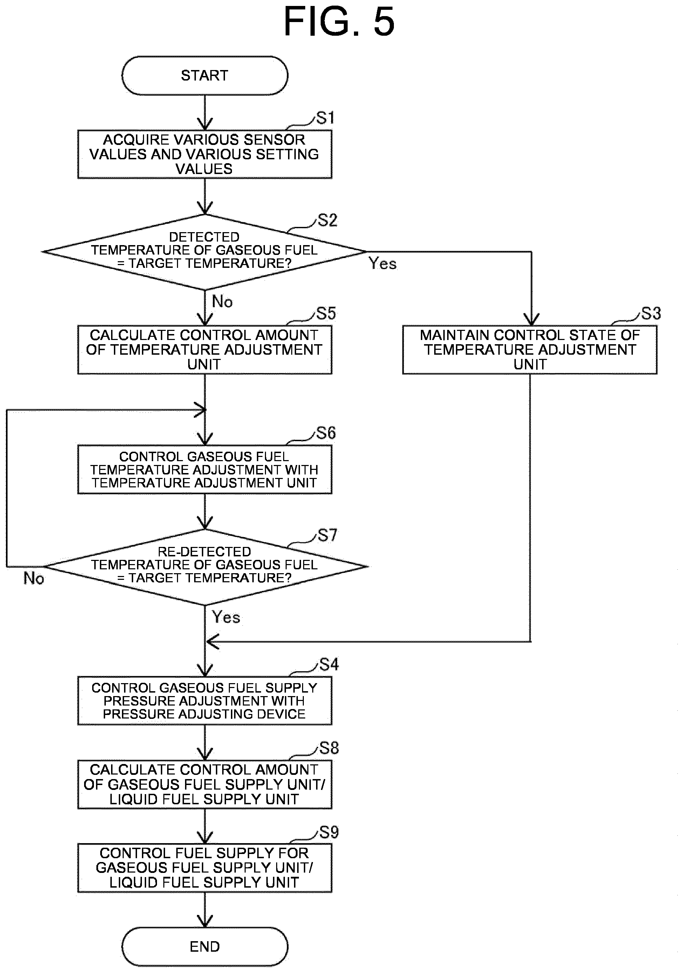

Next, an operation example of the fuel supply device 3 of the engine system 1 of the present embodiment will be described with reference to a flowchart of FIG. 5.

First, the control device 17 acquires, as a control parameter of the fuel supply device 3, various sensor values and various setting values related to the operation status of the engine 2 or the operation environment such as the environmental temperature of the engine 2 or the fuel supply device 3 (step S1). For example, the control device 17 acquires the combustion mode, the co-firing ratio (the ratio of gaseous fuel), the detected temperature of gaseous fuel, and the target output of the engine 2 or the generator load of the generator 4 as control parameters related to the operation status. In addition, the control device 17 acquires the environmental temperature, humidity, and the like of the engine 2 or the fuel supply device 3 as control parameters related to the operation environment.

The control device 17 calculates a target temperature (or the target temperature range) of gaseous fuel supplied to the gaseous fuel supply unit 16 based on the acquired control parameters, and acquires the target temperature based on, for example, a map indicating the relationship between the target output of the engine 2 and the target temperature of gaseous fuel. Then, the control device 17 compares the detected temperature of the gaseous fuel with the target temperature (step S2).

When the detected temperature of the gaseous fuel is the target temperature (or is within the target temperature range) (step S2: Yes), the control device 17 maintains the current control state of the temperature adjustment unit 14 (step S3), and the process proceeds to control of the pressure adjusting device 13 (step S4).

On the other hand, when the detected temperature of the gaseous fuel is not the target temperature (or is outside the target temperature range) (step S2: No), the control device 17 calculates a control amount of the temperature adjustment unit 14 (step S5), and controls temperature adjustment of the gaseous fuel with the temperature adjustment unit 14 based on the control amount (step S6). For example, the control device 17 calculates a flow rate of the heat exchange medium by the first flow rate adjustment unit 41 and a flow rate of the auxiliary medium by the second flow rate adjustment unit 43 as control amounts based on the difference between the detected temperature and the target temperature, and controls the first flow rate adjustment unit 41 and the second flow rate adjustment unit 43.

In parallel with the temperature adjustment with the temperature adjustment unit 14, the control device 17 re-detects the detected temperature of the gaseous fuel and compares the detected temperature of the gaseous fuel with the target temperature (step S7). When the re-detected temperature of the gaseous fuel is not the target temperature (step S7: No), the control device 17 continues the temperature adjustment with the temperature adjustment unit 14 (step S6).

On the other hand, when the re-detected temperature of the gaseous fuel is the target temperature (step S7: Yes), the control device 17 controls the temperature adjustment unit 14 so as to maintain the current temperature of the gaseous fuel, and the process proceeds to control of the pressure adjusting device 13 (step S4).

In the control of the pressure adjusting device 13 (step S4), the control device 17 adjusts the supply pressure of the gaseous fuel to be a target supply pressure corresponding to the target output. When the temperature of the gaseous fuel is adjusted by the temperature adjustment unit 14, the control device 17 controls the pressure adjusting device 13 to adjust the supply pressure of the gaseous fuel so that the supply pressure of the gaseous fuel supplied to the gaseous fuel supply unit 16 becomes the target supply pressure corresponding to the target output in consideration of the fact that the supply pressure of the gaseous fuel fluctuates through the temperature adjustment with the temperature adjustment unit 14.

Further, the control device 17 calculates a control amount such as the valve opening period or the injection pressure of the gaseous fuel supply unit 16 or the liquid fuel supply unit 5 on the basis of a gaseous fuel supply amount required in the combustion chamber 25 based on the target output of the engine 2 and of the supply pressure of the gaseous fuel of the gaseous fuel supply unit 16 (step S8).

Then, the control device 17 controls the gaseous fuel supply unit 16 and the liquid fuel supply unit 5 on the basis of the calculated control amount, and a required supply amount of gaseous fuel or liquid fuel is supplied to the combustion chamber 25 to drive the engine 2 (step S9).

In the operation example described above, an example in which the temperature of the gaseous fuel is re-detected and compared with the target temperature in step S7, which indicates a transition condition for transitioning to the control with the pressure adjusting device 13 after the temperature adjustment with the temperature adjustment unit 14, has been described, but the present invention is not limited to this example. As another example, instead of the above-described transition condition, the control device 17 may determine that the transition condition is satisfied when the elapse of a predetermined time is detected by a timer.

Alternatively, the control device 17 may operate the temperature adjustment unit 14 without the step of determining the transition condition, and the process may directly proceed to gaseous fuel supply pressure control (steps S8 and S9) thereafter. When the temperature of gaseous fuel needs to be adjusted while the engine 2 is operated in the gas mode, for example, when an instruction to change the operation of the engine 2 from operation at medium output to operation at low output is input, waiting for the target temperature to be reached before proceeding to the next step may reduce responsiveness to an engine output change. Therefore, the control device 17 may omit the step of determining the transition condition when the responsiveness to an engine output change is prioritized.

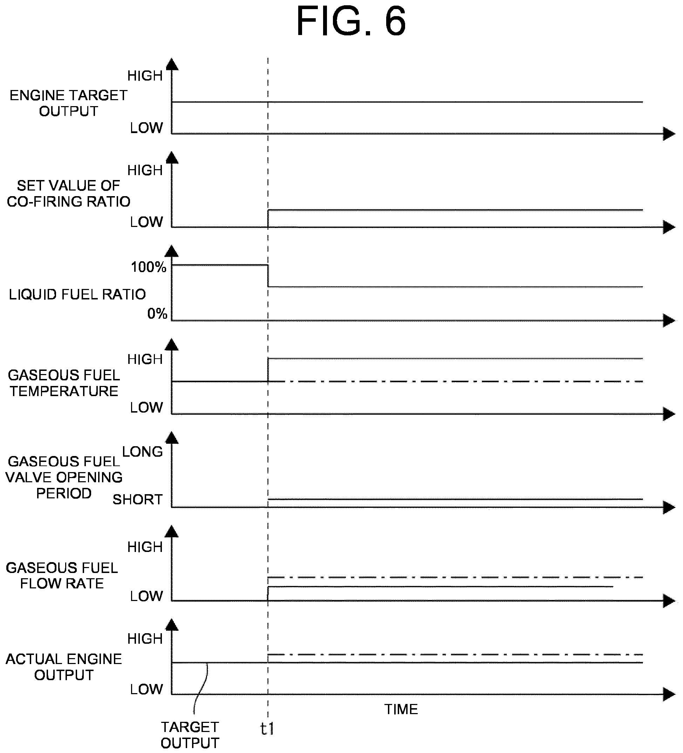

Further, an operation example of the fuel supply device 3 when the mode is changed from the diesel mode to the gas mode (or the co-firing mode) in the engine system 1 of the present embodiment will be described with reference to a time chart of FIG. 6.

FIG. 6 shows changes with time in the target output of the engine 2, the set value of the co-firing ratio of fuel input into the combustion chamber 25, the ratio of liquid fuel, the temperature of gaseous fuel supplied to the gaseous fuel supply unit 16, the valve opening period of the gaseous fuel supply unit 16, the flow rate of gaseous fuel supplied from the gaseous fuel supply unit 16, and the actual output of the engine 2.

In this operation example, the actual output of the engine 2 is the target output while the combustion mode is the diesel mode, and the combustion mode is changed from the diesel mode to the gas mode (or the co-firing mode) at time t1.

According to the combustion mode change, the control device 17 sets the valve opening period of the gaseous fuel supply unit 16 to the minimum valve opening period and sets the flow rate of gaseous fuel of the gaseous fuel supply unit 16 to a predetermined flow rate, the actual output of the engine 2 thereby becomes higher than the target output, and the temperature adjustment unit 14 is controlled to raise the temperature of the gaseous fuel supplied to the gaseous fuel supply unit 16.

By raising the temperature of the gaseous fuel as described above, the control device 17 can decrease the flow rate of the gaseous fuel supplied by the gaseous fuel supply unit 16 in the minimum valve opening period as compared with a case where the temperature of the gaseous fuel is not raised, thereby can decrease the actual output of the engine 2 as compared with the case where the temperature of the gaseous fuel is not raised, and specifically can suppress the actual output to the target output. In FIG. 6, regarding the temperature and the flow rate of gaseous fuel and the actual output of the engine 2, a state in which the temperature of the gaseous fuel is adjusted is indicated by a solid line, and a state in which the temperature of the gaseous fuel is not adjusted is indicated by a dash-dotted line. In the case where the temperature of the gaseous fuel is not adjusted, the actual output of the engine 2 increases until liquid fuel is completely throttled down, and thus exceeds the target output as indicated by the dash-dotted line. However, in the present embodiment, it is possible to suppress the actual output from exceeding the target output by adjusting the temperature of the gaseous fuel.

Note that the control device 17 may control the temperature of gaseous fuel to gradually increase, and in this case, the actual output of the engine 2 may be gradually decreased by controlling the flow rate of the gaseous fuel of the gaseous fuel supply unit 16 to gradually decrease from a predetermined flow rate. In addition, the control device 17 may control the liquid fuel supply unit 5 and the gaseous fuel supply unit 16 so that the ratio of liquid fuel gradually decreases as the temperature of gaseous fuel rises. In addition, when the temperature of gaseous fuel reaches the target temperature, the control device 17 stops the temperature adjustment with the temperature adjustment unit 14, and the actual output of the engine 2 is thereby maintained after being decreased to certain output, for example, the target output.

As described above, according to the present embodiment, the fuel supply device 3 that supplies at least gaseous fuel to a predetermined supply target such as the engine 2 includes: the gaseous fuel supply unit 16 that is a gaseous fuel adjustment unit adjusting the supply amount of gaseous fuel to the supply target and supplying gaseous fuel; and the temperature adjustment unit 14 that adjusts the temperature of the gaseous fuel supplied to the gaseous fuel supply unit 16 according to the operation status and/or the operation environment of the supply target.

Consequently, the fuel supply device 3 can more precisely control the supply amount of gaseous fuel supplied from the gaseous fuel supply unit 16 by adjusting the temperature of the gaseous fuel supplied to the gaseous fuel supply unit 16, and can precisely perform the operation control of the supply target, for example, the output control of the engine 2. Further, in a case of gaseous fuel in a gaseous state, the necessary heat transfer area becomes larger than that required to adjust the temperature of gaseous fuel in a liquid state, but by providing the temperature adjustment unit 14 on the upstream side of the gaseous fuel supply unit 16, it becomes easy to secure the necessary heat transfer area.

According to the present embodiment, the fuel supply device 3 includes the pressure adjusting device 13 that adjusts the supply pressure of gaseous fuel, and the temperature adjustment unit 14 is provided between the pressure adjusting device 13 and the gaseous fuel supply unit 16 in the gaseous fuel supply direction.

Consequently, in the fuel supply device 3, since the temperature adjustment unit 14 exchanges heat with gaseous fuel having passed through a pressure reducing valve or the like of the pressure adjusting device 13 to have an increased flow rate, high heat exchange efficiency can be obtained, enabling more appropriate temperature adjustment. Therefore, the supply amount of gaseous fuel supplied from the gaseous fuel supply unit 16 can be controlled more precisely, and the operation of the supply target, for example, the output of the engine 2 can be more precisely controlled.

In addition, according to the present embodiment, the fuel supply device 3 includes the gaseous fuel supply passage 11 that connects the liquefied gaseous fuel tank 10, which is a gaseous fuel storage unit storing gaseous fuel, to the gaseous fuel supply unit 16 to allow the gaseous fuel to flow, and the pressure adjusting device 13 and the temperature adjustment unit 14 are provided in the gaseous fuel supply passage 11.

Consequently, the fuel supply device 3 can appropriately adjust the supply pressure and the temperature of gaseous fuel supplied to the gaseous fuel supply unit 16.

In addition, according to the present embodiment, the fuel supply device 3 includes the chamber 15 that is provided between the temperature adjustment unit 14 and the gaseous fuel supply unit 16 and accumulates gaseous fuel with an adjusted temperature.

Consequently, the fuel supply device 3 can stably supply gaseous fuel with an adjusted temperature to the engine 2 regardless of the supply of gaseous fuel in the gaseous fuel supply unit 16 by providing the chamber 15 behind the temperature adjustment unit 14. Further, by providing the chamber 15, various valves such as the first shut-off valve 36 and the second shut-off valve 37 provided in the pressure adjusting device 13 can be simplified.

In addition, according to the present embodiment, the supply target of the fuel supply device 3 is the engine 2 including the plurality of cylinder engines 21, the gaseous fuel supply unit 16 is the gaseous fuel supply valve provided in each of the cylinder engines 21, the gaseous fuel supply passage 11 includes the common passage 11a through which gaseous fuel flows in common to the plurality of cylinder engines 21, and the temperature adjustment unit 14 is provided in the common passage 11a.

Consequently, the fuel supply device 3 can be simplified as compared with a case where a mechanism for adjusting the temperature of gaseous fuel is provided for each gaseous fuel supply valve.

Further, according to the present embodiment, the engine system 1 includes the fuel supply device 3 described above and the engine 2, in which the temperature adjustment unit 14 has the first heat exchanger 40, which is a heat exchange unit circulating a heat exchange medium to act on gaseous fuel, and the first flow rate adjustment unit 41 that adjusts the flow rate of the heat exchange medium; the engine system 1 further includes the control device 17 that controls the gaseous fuel supply unit 16 and the first flow rate adjustment unit 41; the control device 17 calculates a target temperature of gaseous fuel based on a target output of the engine 2; and when a detected temperature of the gaseous fuel is less than the target temperature, the first flow rate adjustment unit 41 is controlled such that the detected temperature becomes the target temperature to raise the temperature of the gaseous fuel.

In the engine system 1, even when the required valve opening period of the gaseous fuel supply unit 16 calculated based on the target output of the engine 2 becomes smaller than the minimum valve opening period, in order to supply gaseous fuel by operating the gaseous fuel supply unit 16 in the minimum valve opening period, more gaseous fuel than expected may be supplied, and the actual output of the engine 2 may become higher than the target output. On the other hand, in the present embodiment, by raising the temperature of gaseous fuel to the target temperature based on the target output of the engine 2 and decreasing the energy density of gaseous fuel supplied from the gaseous fuel supply unit 16, it is possible to control the actual output of the engine 2 to the target output even when the gaseous fuel supply unit 16 is operated in a valve opening period equal to or longer than the minimum valve opening period when the required valve opening period is shorter than the minimum valve opening period.

In addition, according to the present embodiment, the engine system 1 includes the fuel supply device 3 described above and the engine 2, in which the temperature adjustment unit 14 has the first heat exchanger 40, which is a heat exchange unit circulating a heat exchange medium to act on gaseous fuel, and the first flow rate adjustment unit 41 that adjusts the flow rate of the heat exchange medium; the engine system 1 further includes the control device 17 that controls the gaseous fuel supply unit 16 and the first flow rate adjustment unit 41; and the control device 17 controls the first flow rate adjustment unit 41 so as to stop the circulation of the heat exchange medium when the target output of the engine 2 is equal to or greater than a predetermined output threshold.

Alternatively, in the engine system 1, the temperature adjustment unit 14 has the first heat exchanger 40, which is a heat exchange unit that circulates a heat exchange medium to act on gaseous fuel, and the cooling device 44 that cools the heat exchange medium; the engine system 1 further includes the control device 17 that controls the gaseous fuel supply unit 16 and the cooling device 44; and the control device 17 controls the cooling device 44 to operate when the target output of the engine 2 is equal to or greater than a predetermined output threshold.

Consequently, when the engine 2 is in a high load region, the engine system 1 decreases the temperature of gaseous fuel supplied to the gaseous fuel supply unit 16, thereby supplying more gaseous fuel to the engine 2, and a high output can be obtained.

As another example, in order to improve real-time accuracy of the temperature of gaseous fuel in the gaseous fuel supply unit 16 in response to the gaseous fuel temperature adjustment with the temperature adjustment unit 14, another passage communicating from the temperature adjustment unit 14 to the gaseous fuel supply unit 16 without passing through the chamber 15 may be provided. Further, in order to improve real-time accuracy of the temperature of gaseous fuel standing by between the chamber 15 and the gaseous fuel supply unit 16, gaseous fuel with a temperature adjusted by the temperature adjustment unit 14 may be circulated.

In the above-described embodiment, an example in which the engine system 1 (control device 17) adjusts the supply pressure of gaseous fuel with the pressure adjusting device 13 so that the supply pressure becomes a target supply pressure (or a target supply pressure range) according to the target output of the engine 2, and controls the temperature of the gaseous fuel with the temperature adjustment unit 14 so that the detected temperature of the gaseous fuel supplied to the gaseous fuel supply unit 16 becomes the target temperature according to the operation status (for example, the target output) of the engine 2 or the operation environment of the engine 2 or the fuel supply device 3, and the supply amount of the gaseous fuel is thereby adjusted has been described. However, the present invention is not limited to this example.

For example, in a modification of the present invention, the engine system 1 (control device 17) may adjust the supply amount of gaseous fuel by adjusting the supply pressure of the gaseous fuel with the pressure adjusting device 13 and adjusting the valve opening period with the gaseous fuel supply unit 16 according to the operation status of the engine 2 and/or the operation environment of the engine 2 or the fuel supply device 3, without controlling the temperature of the gaseous fuel.

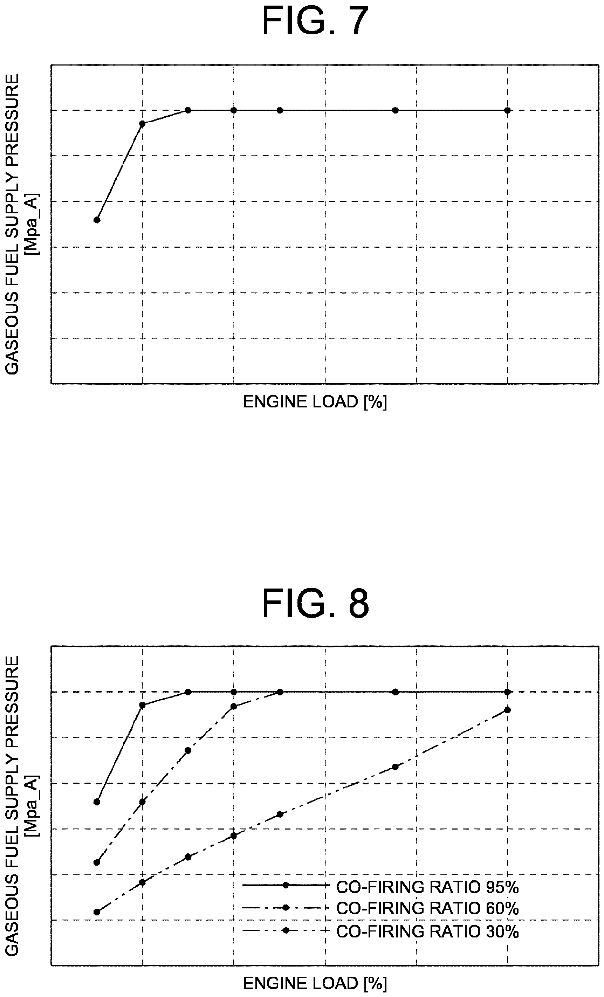

In this modification, specifically, when the engine 2 is normally operated, the control device 17 adjusts the supply pressure of gaseous fuel supplied from the fuel supply device 3 to the gaseous fuel supply unit 16 to be a constant value with the pressure adjusting device 13 regardless of the operation status and/or the operation environment, as illustrated in FIG. 7.

On the other hand, when the engine 2 is operated in a low load region, the control device 17 adjusts the supply pressure of gaseous fuel with the pressure adjusting device 13 so as to be a supply pressure according to the operation status and/or the operation environment. In this case, the control device 17 detects the actual load applied to the engine 2, and determines that the engine 2 is operated in the low load region when the actual load is equal to or less than a predetermined load threshold (for example, 20%).

The control device 17 may preliminarily determine and store a map or a mathematical expression indicating the relationship between the load of the engine 2 and the target supply pressure (or the target supply pressure range) of gaseous fuel. Incidentally, the control device 17 may hold a map or a mathematical expression indicating the relationship between the load of the engine 2 and the target supply pressure of the gaseous fuel for each operation environment (for example, environmental temperature or humidity), and use the map or the mathematical expression corresponding to the detected operation environment. Then, the control device 17 acquires the target supply pressure corresponding to the detected actual load of the engine 2 based on the map or the mathematical expression, and adjusts the supply pressure of gaseous fuel to the target supply pressure with the pressure adjusting device 13.

At this time, the control device 17 controls the pressure adjusting device 13 to change the supply pressure of the gaseous fuel at a pressure change rate according to the operation mode of the engine 2. Specifically, when the detected supply pressure of the gaseous fuel is higher than the target supply pressure corresponding to the actual load of the engine 2, the control device 17 adjusts the supply pressure of the gaseous fuel to decrease. In addition, when the detected supply pressure of the gaseous fuel is lower than the target supply pressure corresponding to the actual load of the engine 2, the control device 17 adjusts the supply pressure of the gaseous fuel to increase.

When the operation mode of the engine 2 is a notch-down mode or an emergency response mode, the control device 17 sets the pressure change rate faster than that in a case where the operation mode is the normal mode. For example, the control device 17 sets the pressure change rate to ±1 MPa/min when the operation mode is the normal mode, and the control device 17 sets the pressure change rate to ±15 MPa/sec when the operation mode is the notch-down mode or the emergency response mode. Note that since the target supply pressure becomes the upper limit value or the lower limit value, the control device 17 does not adjust the supply pressure exceeding the target supply pressure.

FIG. 7 shows a map showing the relationship between the load of the engine 2 and the target supply pressure of gaseous fuel in the case where the combustion mode of the engine 2 is the gas mode, and FIG. 8 shows a map showing the relationship between the load of the engine 2 and the target supply pressure of gaseous fuel in accordance with the co-firing ratio in the case where the combustion mode is the co-firing mode.

In the co-firing mode, when the co-firing ratio is low, it is necessary to cause the gaseous fuel supply unit 16 to finely inject gaseous fuel in order to reduce the supply amount of the gaseous fuel, but the supply amount of the gaseous fuel may not be narrowed down depending on the response speed of the gaseous fuel supply unit 16 to the fine injection control. Therefore, as shown in FIG. 8, the control device 17 may preliminarily prepare a map or a mathematical expression indicating the relationship between the load of the engine 2 and the target supply pressure of the gaseous fuel so that the load threshold becomes higher as the co-firing ratio becomes lower.

Note that the present invention can be appropriately modified without departing from the spirit or idea of the invention which can be read from the claims and the entire specification, and fuel supply devices and engine systems with such modifications are also included in the technical idea of the present invention.

### Supplementary notes of invention

Hereinafter, an outline of the invention extracted from the above-described embodiments will be supplementarily noted. Note that the respective configurations and the respective processing functions described in the following supplementary notes can be selected and arbitrarily combined.

### Supplementary note 1

A fuel supply device supplying at least gaseous fuel to a predetermined supply target, the fuel supply device including:
a gaseous fuel adjustment unit adjusting a supply amount of the gaseous fuel and supplying the gaseous fuel to the supply target; and
a temperature adjustment unit adjusting a temperature of the gaseous fuel supplied to the gaseous fuel adjustment unit according to an operation status and/or an operation environment of the supply target.

### Supplementary note 2

A fuel supply device supplying at least gaseous fuel to a predetermined supply target, the fuel supply device including:
a gaseous fuel adjustment unit adjusting a supply amount of the gaseous fuel and supplying the gaseous fuel to the supply target; and
a supply pressure adjustment unit adjusting a supply pressure of the gaseous fuel supplied to the gaseous fuel adjustment unit according to an operation status and/or an operation environment of the supply target.

### Supplementary note 3

The fuel supply device according to supplementary note 1, including a pressure adjusting device adjusting a supply pressure of the gaseous fuel, in which
the temperature adjustment unit is provided between the pressure adjusting device and the gaseous fuel adjustment unit in a supply direction of the gaseous fuel.

### Supplementary note 4

The fuel supply device according to supplementary note 3, including
a gaseous fuel storage unit storing the gaseous fuel, and
a gaseous fuel supply passage connecting the gaseous fuel storage unit to the gaseous fuel adjustment unit to allow the gaseous fuel to flow, in which
the pressure adjusting device and the temperature adjustment unit are provided in the gaseous fuel supply passage.

### Supplementary note 5

The fuel supply device according to any of supplementary notes 1 to 4, including a chamber provided between the temperature adjustment unit and the gaseous fuel adjustment unit, the chamber accumulating the gaseous fuel with an adjusted temperature.

### Supplementary note 6

The fuel supply device according to supplementary note 4 or 5, in which the supply target is an engine including a plurality of cylinder engines,
the gaseous fuel adjustment unit is a gaseous fuel supply valve provided in each of the plurality of cylinder engines,
the gaseous fuel supply passage includes a common passage allowing the gaseous fuel to flow to the plurality of cylinder engines in common, and
the temperature adjustment unit is provided in the common passage.

### Supplementary note 7

An engine system including:
the fuel supply device according to supplementary note 6; and
the engine, in which
the temperature adjustment unit has a heat exchange unit circulating a heat exchange medium to act on the gaseous fuel, and a flow rate adjustment unit adjusting a flow rate of the heat exchange medium;
the engine system further includes a control device controlling the gaseous fuel adjustment unit and the flow rate adjustment unit;
the control device calculates a target temperature of the gaseous fuel based on a target output of the engine; and
when a detected temperature of the gaseous fuel is less than the target temperature, the flow rate adjustment unit is controlled such that the detected temperature becomes the target temperature to raise the temperature of the gaseous fuel.

### Supplementary note 8

An engine system including:
the fuel supply device according to supplementary note 6; and
the engine, in which
the temperature adjustment unit has a heat exchange unit circulating a heat exchange medium to act on the gaseous fuel, and a flow rate adjustment unit adjusting a flow rate of the heat exchange medium;
the engine system further includes a control device controlling the gaseous fuel adjustment unit and the flow rate adjustment unit; and
the control device controls the flow rate adjustment unit to stop circulation of the heat exchange medium when a target output of the engine is equal to or greater than a predetermined output threshold.

### Supplementary note 9

An engine system including:
the fuel supply device according to supplementary note 6; and
the engine, in which
the temperature adjustment unit has a heat exchange unit circulating a heat exchange medium to act on the gaseous fuel, and a cooling device cooling the heat exchange medium;
the engine system further includes a control device controlling the gaseous fuel adjustment unit and the cooling device; and
the control device controls the cooling device to operate when a target output of the engine is equal to or greater than a predetermined output threshold.

### REFERENCE SIGNS LIST

1 Engine system
2 Engine (supply target)
3 Fuel supply device
4 Generator
5 Liquid fuel supply unit
10 Liquefied gaseous fuel tank (gaseous fuel storage unit)
11 Gaseous fuel supply passage
11a Common passage
11b Branch passage
12 Vaporizer
13 Pressure adjusting device
14 Temperature adjustment unit
15 Chamber
16 Gaseous fuel supply unit (gaseous fuel adjustment unit)
17 Control device
21 Cylinder engine
25 Combustion chamber
36 First shut-off valve
37 Second shut-off valve
38 Open passage
39 Open valve
40 First heat exchanger
41 First flow rate adjustment unit
42 Second heat exchanger
43 Second flow rate adjustment unit
44 Cooling device

## Claims

1. A fuel supply device supplying at least gaseous fuel to a predetermined supply target, the fuel supply device comprising:
a gaseous fuel adjustment unit adjusting a supply amount of the gaseous fuel and supplying the gaseous fuel to the supply target; and
a temperature adjustment unit adjusting a temperature of the gaseous fuel supplied to the gaseous fuel adjustment unit according to an operation status and/or an operation environment of the supply target.

2. A fuel supply device supplying at least gaseous fuel to a predetermined supply target, the fuel supply device comprising:
a gaseous fuel adjustment unit adjusting a supply amount of the gaseous fuel and supplying the gaseous fuel to the supply target; and
a supply pressure adjustment unit adjusting a supply pressure of the gaseous fuel supplied to the gaseous fuel adjustment unit according to an operation status and/or an operation environment of the supply target.

3. The fuel supply device according to claim 1, comprising a pressure adjusting device adjusting a supply pressure of the gaseous fuel, wherein
the temperature adjustment unit is provided between the pressure adjusting device and the gaseous fuel adjustment unit in a supply direction of the gaseous fuel.

4. The fuel supply device according to claim 3, comprising
a gaseous fuel storage unit storing the gaseous fuel, and
a gaseous fuel supply passage connecting the gaseous fuel storage unit to the gaseous fuel adjustment unit to allow the gaseous fuel to flow, wherein
the pressure adjusting device and the temperature adjustment unit are provided in the gaseous fuel supply passage.

5. The fuel supply device according to claim 1, comprising a chamber provided between the temperature adjustment unit and the gaseous fuel adjustment unit, the chamber accumulating the gaseous fuel with an adjusted temperature.

6. The fuel supply device according to claim 4, wherein the supply target is an engine including a plurality of cylinder engines,
the gaseous fuel adjustment unit is a gaseous fuel supply valve provided in each of the plurality of cylinder engines,
the gaseous fuel supply passage includes a common passage allowing the gaseous fuel to flow to the plurality of cylinder engines in common, and
the temperature adjustment unit is provided in the common passage.

7. An engine system comprising:
the fuel supply device according to claim 6; and
the engine, wherein
the temperature adjustment unit has a heat exchange unit circulating a heat exchange medium to act on the gaseous fuel, and a flow rate adjustment unit adjusting a flow rate of the heat exchange medium;
the engine system further comprises a control device controlling the gaseous fuel adjustment unit and the flow rate adjustment unit;
the control device calculates a target temperature of the gaseous fuel based on a target output of the engine; and
when a detected temperature of the gaseous fuel is less than the target temperature, the flow rate adjustment unit is controlled such that the detected temperature becomes the target temperature to raise the temperature of the gaseous fuel.

8. An engine system comprising:
the fuel supply device according to claim 6; and
the engine, wherein
the temperature adjustment unit has a heat exchange unit circulating a heat exchange medium to act on the gaseous fuel, and a flow rate adjustment unit adjusting a flow rate of the heat exchange medium;
the engine system further comprises a control device controlling the gaseous fuel adjustment unit and the flow rate adjustment unit; and
the control device controls the flow rate adjustment unit to stop circulation of the heat exchange medium when a target output of the engine is equal to or greater than a predetermined output threshold.

9. An engine system comprising:
the fuel supply device according to claim 6; and
the engine, wherein
the temperature adjustment unit has a heat exchange unit circulating a heat exchange medium to act on the gaseous fuel, and a cooling device cooling the heat exchange medium;
the engine system further comprises a control device controlling the gaseous fuel adjustment unit and the cooling device; and
the control device controls the cooling device to operate when a target output of the engine is equal to or greater than a predetermined output threshold.
